# EUROPÄISCHE PATENTSCHRIFT

(11) **EP 0 676 565 B1**
(45) Veröffentlichungstag und Bekanntmachung des Hinweises auf die Patenterteilung: **29.08.2001**
(21) Anmeldenummer: 95102572.5
(22) Anmeldetag: 23.02.1995
(51) Int. Cl.: F16H 61/02, B60K 41/14, F16H 61/38

(54) **Steuerverfahren und Steuereinrichtung für ein stufenloses Getriebe**
Control method and control unit for a continuously variable transmission
Procédé et dispositif de commande pour transmission à variation continue

(30) Priorität: 07.04.1994 DE 4411940
(43) Veröffentlichungstag der Anmeldung: 11.10.1995
(73) Patentinhaber: Dr.Ing.h.c. F. Porsche Aktiengesellschaft, 70435 Stuttgart (DE)
(72) Erfinder: Petersmann, Joseph, D-71299 Wimsheim (DE); Stehle, Heinz, D-71287 Weissach (DE); Seidel, Willi, D-71735 Eberdingen (DE); Lardy, Patric, D-71263 Weil der Stadt (DE)

(56) Entgegenhaltungen:
- EP-A- 0 126 869
- DE-A- 3 439 881
- DE-A- 3 827 304
- US-A- 4 107 776
- US-A- 4 648 040
- US-A- 4 656 587
- US-A- 4 715 258

## Beschreibung

Die Erfindung betrifft ein Steuerverfahren und eine Steuereinrichtung für ein stufenloses Getriebe nach der Gattung der unabhängigen Patentansprüche.

In der Regel sind in solchen Steuereinrichtungen mehrere Steuerkennlinien vorgesehen, die verschiedene Betriebsweisen des stufenlosen Getriebes von einem leistungsorientierten Betrieb bis hin zu einem verbrauchsoptimierten Betrieb zulassen. Doch selbst beim Betrieb mit einer verbrauchsoptimierten Steuerkennlinie ist zu berücksichtigen, daß auch ein instationärer Betrieb des Fahrzeuges und insbesondere ein Beschleunigen möglich sein muß. Demzufolge kann auch eine verbrauchsoptimale Steuerkennlinie den minimal möglichen Verbrauch im gewählten Betriebspunkt nicht erreichen, da aufgrund des hier herrschenden geringen Zugkraftüberschusses ein Beschleunigen des Fahrzeuges kaum mehr möglich ist.

Die US 4,107,776 zeigt eine Steuerung für ein stufenloses Getriebe, bei der das Getriebe über Kennlinien so eingeregelt wird, dass sich ein vorgegebener Wert für das Abtriebsdrehmoment des Getriebes einstellt. Die Lage dieser Kennlinien ist von der aktuellen Betätigung des Leistungsteuerorganes, d.h. des Gaspedales, abhängig. Auf diese Weise kann auch bei einer Antriebsmaschine, die hinsichtlich ihrer Leistungsabgabe reduziert ist, noch eine ausreichende Fahrbarkeit des Fahrzeuges gewährleistet werden. Das beschriebene System verwendet hierbei ein elektronisches Gaspedal. Es wird davon ausgegangen, dass das Getriebe grundsätzlich nach einer Kennlinie niedrigsten Kraftstoffverbrauchs einzuregeln ist. Bei einer Änderung der Stellung des Gaspedales wird eine für die vorhergehende Gaspedalstellung gültige Kennlinie in eine für die neue Gaspedalstellung gültige Kennlinie mittels einer vorgegebenen Funktion überführt. Hiermit wird für die Übergangszeit, d. h. bis zum Erreichen des neuen Gleichgewichtspunktes für die aktuelle Gaspedalstellung, eine verbesserte Reaktion des Fahrzeuges erzielt. Ist ein Betriebspunkt einmal erreicht, so wird auch bei konstanter Fahrweise die Kennlinie des Getriebes nicht weiter verändert.

Die US 4,648,040 zeigt eine kombinierten Motor-Getriebe-Steuerung für ein stufenloses Getriebe, bei der die Steuerung dazu verwendet wird, den Antriebsstrang stets in einem Punkt niedrigsten Verbrauchs zu betreiben. Bei konstanter Fahrt wird ein einmal erreichter Gleichgewichtspunkt beibehalten und es erfolgt keine weitere Anpassung.

Der Erfindung liegt demgegenüber die Aufgabe zugrunde, ein Steuerverfahren und eine Steuereinrichtung für ein stufenloses Getriebe zu schaffen, mit dem die Brennkraftmaschine auch in ihren verbrauchsoptimalen Punkten betreibbar ist.

Diese Aufgabe wird mit den Merkmalen der unabhängigen Ansprüche gelöst. Mit den dort vorgesehenen Maßnahmen wird zunächst eine mit "konstante Fahrweise" umschriebene Fahrsituation erkannt, in der nur ein geringer Zugkraftüberschuß benötigt wird. Die mit "konstanter Fahrweise" umschriebene Fahrsituation wird durch Prüfstufen zu erkannt. Es wird geprüft, ob Zugkraftüberschuß vorliegt, d.h. das Fahrzeug darf nicht ohnehin schon an der Grenze seines Leistungsvermögens betrieben werden. Geprüft wird auch, ob das Leistungssteuerorgan, z.B. eine Drosselklappe, betätigt ist, so daß festgestellt werden kann, ob der Fahrer in der Lage ist, die Leistung der Brennkraftmaschine zu beeinflussen. Schließlich wird geprüft, ob im wesentlichen konstante Fahrt vorliegt, d.h., ob im Moment die Beträge der Änderungen von Fahrgeschwindigkeit und Stellung des Leistungssteuerorganes gering sind. Liegt eine solche Situation vor, so wird nach der Erfindung eine Anpassung der eingestellten Übersetzung in der Weise vorgenommen, daß die Brennkraftmaschine nunmehr in ihrem Punkt geringsten spezifischen Kraftstoffverbrauchs für den vorliegenden Betriebspunkt des Fahrzeuges betrieben wird. Da die Erfindung in Ergänzung einer Grundsteuerung wirkt kann der Zielkonflikt zwischen optimalem Verbrauch einerseits und verkehrsgerechtem Beschleunigungsvermögen andererseits gelöst werden, indem nur in besonders geeigneten Fahrsituationen ein verbrauchsoptimaler Betrieb eingestellt wird.

In den Unteransprüchen sind vorteilhafte Weiterbildungen der Erfindung beschrieben.

Zur Anpassung der Übersetzung wird vorgeschlagen, zunächst eine verbrauchsoptimale Soll-Antriebsdrehzahl zu ermitteln und sodann nach einer vorgegebenen Übergangsfunktion die Ist-Antriebsdrehzahl dieser Soll-Antriebsdrehzahl anzupassen. Diesem Vorgehen liegt die Erkenntnis zugrunde, daß der Fahrer des Fahrzeuges indirekt in das Geschehen mit eingebunden ist, da er, um die Leistung und damit die Fahrgeschwindigkeit des Fahrzeuges zu erhalten, die Stellung des Leistungssteuerorganes so verändern muß, daß die Leistung der Brennkraftmaschine gehalten wird. An die Stelle des Fahrers kann, soweit vorhanden, auch eine automatische Geschwindigkeitsregelanlage treten. In beiden Fällen ist die vorgegebene Übergangsfunktion notwendig, um die Änderung der Übersetzung so durchführen zu können, daß der Fahrer bzw. die Geschwindigkeitsregelanlage möglichst leicht zur Anpassen der Stellung des Leistungssteuerorgans folgen können. Hierdurch sind ruckartige Übergänge oder gar Irritationen des Fahrers vermieden; bei idealer Auslegung der Übergangsfunktion kann die Änderung der Übersetzung für den Fahrer unmerklich erfolgen.

Die vorgeschlagene Zwischenprüfung, bei der während einer längeren Überwachungszeit das Integral über den Betrag der Änderungen von Fahrgeschwindigkeit und Stellung des Leistungssteuerorganes überwacht wird, stellt sicher, daß die Veränderung der Übersetzung, die wie eingangs erwähnt, den Verbrauch aber auch das Beschelunigungsvermögen des Fahrzeuges vermindert, nur dann eingeleitet wird, wenn dies die Fahrsituation tatsächlich erlaubt. Hierzu wird auch nicht das Integral der Änderungen sondern das Integral des Betrages der Änderungen gebildet, um somit alle Änderungen, gleich ob sie positiv oder negativ sind, zu erfassen.

Zusammenfassend wird mit der Erfindung eine Fahrsituation erkannt, wie sie beispielsweise auf Autobahnen anzutreffen ist, wenn das Fahrzeug bei geringem bis mäßigem Verkehr bewegt wird, ohne daß Steigungen, Überholvorgänge oder ein Fahren in der Nähe der Höchstgeschwindigkeit ein höheres Leistungsvermögen der Brennkraftmaschine erforderlich machen. Es werden in vorteilhafter Weise keine eigenen Stelleinrichtungen benötigt, sondern eine vorhandene Steuereinrichtung für ein stufenloses Getriebe kann ohne weiteren Aufwand mit der Erfindung ergänzt werden. Das erforderliche Nachregeln der Stellung des Leistungssteuerorganes erfolgt in besonders einfacher Weise durch den Fahrer selbst oder in etwas komfortablerer Weise mittels einer gegebenenfalls vorhandenen Geschwindigkeitssteuereinrichtung.

Die Erfindung ist nachstehend anhand eines in den Figuren gezeigten Ausführungsbeispieles dargestellt.

Es zeigen:
- Fig. 1: ein Motorkennfeld, anhand dessen die Wirkung des erfindungsgemäßen Verfahrens erläutert wird, und
- Fig. 2: ein schematisches Ablaufdiagramm des erfindungsgemäßen Verfahrens.

In bekannter und daher nicht gezeigter Weise ist in einem Fahrzeug ein stufenloses Getriebe angeordnet, dem eine Brennkraftmaschine vorgeschaltet ist. Dem stufenlosen Getriebe nachgeschaltet ist ein auf Räder des Fahrzeuges wirkender Antriebsstrang. Das stufenlose Getriebe ist mit einer Steuereinrichtung verbunden, die verschiedene Betriebsgrößen des Fahrzeuges ermittelt und hiernach im stufenlosen Getriebe eine Besetzung einstellt. Im Ausführungsbeispiel erfasst die Steuereinrichtung folgende Größen: eine Drosselklappenstellung alpha(t) als Stellung eines Leistungssteuerorganes der Brennkraftmaschine, eine Fahrgeschwindigkeit v(t), der eine Abtriebsdrehzahl na(t) äquivalent ist, eine Motordrehzahl nmot(t) der Brennkraftmaschine, die im Fahrbetrieb gleich einer Eingangsdrehzahl ne(t) des Getriebes ist, sowie eine Zugkraftzahl mf1 (t), die einen Wert zwischen 0 und 1 annimmt und ein Maß für die aktuelle Zugkraftausnutzung des Fahrzeuges (Verhältnis von Leistungsanforderung, d.h. Drosselklappenstellung alpha(t) zu Änderung der Fahrgeschwindigkeit v(t) ) entspricht. Hierbei bedeutet der Wert mf1 = 0 eine sehr geringe Zugkraftausnutzung, der Wert mf1 = 0,5 ein Gleichgewicht zwischen Leistungsanforderung und Zugkraft und der Wert mf1 = 1 einen erheblichen Zugkraftmangel. Schließlich ergibt sich aus dem Verhältnis von Eingangsdrehzahl ne(t) und Abtriebsdrehzahl na(t) eine Übersetzung i des Getriebes.

Das erfindungsgemäße Verfahren ist in Form einer Funktion verwirklicht, die im Rahmen einer nicht dargestellten Grundsteuerung in regelmäßigen Abständen aufgerufen wird.

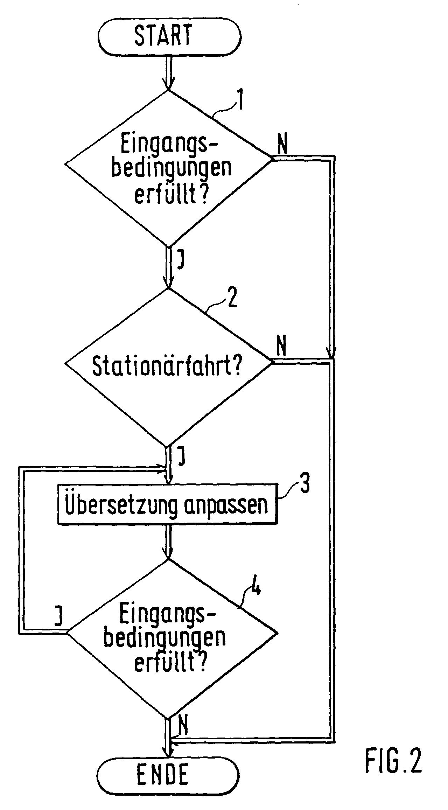

Nach dem Aufruf der Funktion werden die in Fig. 2 dargestellten Schritte durchlaufen. In Schritt 1 werden folgende Eingangsbedingungen geprüft:
- Ist nur die Grundsteuerung aktiv, d.h. sind keine Sonderfunktionen wie etwa ein Bergprogramm, eine Hochschaltverhinderung o.ä. aufgerufen?
- Liegt die Zugkraftkennzahl mf1 unterhalb eines kleinen Grenzwertes, hier 0,1?
- Ist die Drosselklappe betätigt, d.h. die Drosselklappenstellung alpha(t) größer 5 %?
- Ist der Betrag der Änderung der Drosselklappenstellung während der letzten Sekunde sehr klein, hier < 2 %?
- Ist der Betrag der Änderung der Fahrgeschwindigkeit v(t) während der letzten Sekunde sehr klein, hier < 1 km/h?

Zum Zeitpunkt des Funktionsaufrufes müssen die vorgenannten Bedingungen alle gleichzeitig erfüllt sein. Zur Vereinfachung der Ermittlung der Änderung von Fahrgeschwindigkeit v(t) und Drosselklappenstellung alpha(t) entspricht der Zeitraum, über den diese Änderung ermittelt wird, dem Zeitraum zwischen zwei Funktionsaufrufen, so daß bei jedem Funktionsaufruf der aktuelle Wert für die Fahrgeschwindigkeit v(t) bzw. die Drosselklappenstellung alpha(t) mit dem Wert des vorhergehenden Funktionsaufrufes verglichen werden kann und keine zwischenliegenden Funktionsaufrufe zum Ermitteln dieser Werte notwendig sind.

Sind die Eingangsbedingungen in Schritt 1 nicht erfüllt, so wird die Funktion unmittelbar beendet. Im anderen Fall wird die Funktion in Schritt 2 fortgesetzt, in dem geprüft wird, ob tatsächlich Stationärfahrt vorliegt. Hierzu soll das Integral über die Beträge der Änderungen von Fahrgeschwindigkeit v(t) und Drosselklappenstellung alpha(t) gebildet werden. Wie bereits für Schritt 1 beschrieben, ist es zur Vereinfachung des Steuerablaufes in der Steuereinrichtung vorgesehen, daß das Integral nicht im mathematischen Sinne sondern in Zeitschritten gebildet wird, die dem zeitlichen Abstand zweier Aufrufe der Funktion entsprechen. Es wird somit im strengen Sinne die Summe über die Beträge der Differenzen der zu bewachenden Werte zwischen zwei Funktionsaufrufen gebildet. Im Ausführungsbeispiel umfasst diese Prüfung einen Zeitraum von ca. 10 sec und die Integrale bzw. Summen müssen nachher einen Wert < 5 % für die Drosselklappenstellung alpha(t) und einen Wert < 3 km/h für die Fahrgeschwindigkeit v(t) aufweisen.

Ist diese Bedingung verletzt, so wird die Funktion nach Schritt 2 unmittelbar beendet. Anderenfalls erfolgt in Schritt 3 das eigentliche Anpassen der Übersetzung i. Hierzu wird zunächst mittels eines Kennfeldes eine der aktuellen Drosselklappenstellung alpha(t) und der aktuellen Motordrehzahl nmot(t) zugeordnete Motorleistung P bestimmt. Nachfolgend wird eine Soll-Motordrehzahl n_soll ermittelt, bei der die Brennkraftmaschine bei der herrschenden Motorleistung P ihren geringsten spezifischen Kraftstoffverbrauch aufweist; auch hier wird eine Tabelle, eine Kennlinie o.ä. verwendet. Aus der Sollmotordrehzahl n_soll kann nun mit Hilfe der Abtriebsdrehzahl na(t) eine Sollübersetzung i_soll ermittelt werden. Nach diesen vorbereitenden Maßnahmen erfolgt die Anpassung der Übersetzung i, indem nach einer Übergangsfunktion die aktuelle Übersetzung i zur Sollübersetzung i_soll hingeführt wird. Diese Übergangsfunktion ist hierbei fahrzeugabhängig zu bemessen; insbesondere ist die Änderungsgeschwindigkeit der Motordrehzahl nmot(t) und hiermit einhergehend die Änderungsgeschwindigkeit der Fahrgeschwindigkeit v(t) zum einen so groß zu bemessen, daß der Fahrer diese Änderung bemerkt und entsprechend die Drosselklappenstellung alpha(t) nachstellt, anderseits so klein ist, daß der Fahrer hiervon nicht überrascht wird. Für ein dem Ausführungsbeispiel zugrunde liegendes Fahrzeug hat sich in Versuchen ergeben, daß eine Änderung der Motordrehzahl von 10 U/min in 1 sec ein Wert ist, bei dem die genannten Anforderungen gut erfüllt werden. Ähnliche Auslegungskriterien ergeben sich, wenn im Fahrzeug eine Geschwindigkeitsregelanlage vorgesehen ist; jedoch wird dies zu anderen Werte führen, da nun auf die Reaktion dieser Geschwindigkeitsregelanlage abzustellen ist.

Wie in Schritt 4 dargestellt, wird währenddessen stets, d.h. in kurzen Abständen, geprüft, ob die genannten Eingangsbedingungen weiterhin erfüllt sind. Ist dies nicht der Fall, so wird die Anpassung der Übersetzung i abgebrochen und die Funktion beendet.

Nicht dargestellt ist, daß der in Fig. 2 gezeigten Funktion wiederum ein Übergangsfilter nachgeschaltet ist, das, sofern bereits eine Anpassung der Übersetzung i stattgefunden hat, den Übergang zu der von der Grundsteuerung ermittelten Übersetzung i bestimmt. Dieser Übergang bestimmt sich nach den veränderten Betriebsparametern. So wird z.B. dieser Übergang, d.h. die Änderung der Übersetzung, sehr abrupt ausfallen, wenn plötzlich z.B. für einen Überholvorgang die Drosselklappenstellung alpha(t) maximal wird.

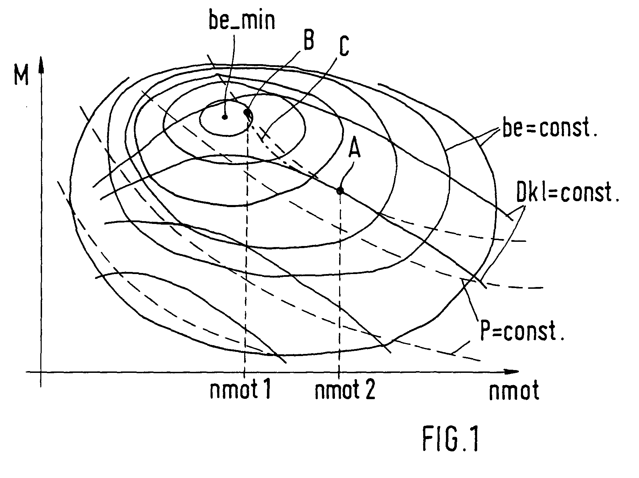

Die Wirkung der beschriebenen Funktion ist in Fig. 1 dargestellt. Fig. 1 zeigt ein an sich bekanntes Motorkennfeld, in dem ein Motormoment M über der Motordrehzahl nmot aufgetragen ist. Die geschlossenen muschelförmigen Linien sind Linien gleichen spezifischen Kraftstoffverbrauchs be, wobei der Kraftstoffverbrauch sinkt, je näher diese Linien an einen Punkt minimalen Kraftstoffverbrauches be_min zu liegen kommen. Ferner sind durchgezogen Linien konstanter Drosselklappenstellung alpha(t) und gestrichelt Linien konstanter Motorleistung P eingetragen.

Zum Zeitpunkt der Funktionseinleitung befindet sich die Brennkraftmaschine in einem Betriebspunkt A. Nach Funktionseinleitung, d.h. bei konstanter Fahrweise mit hohem Zugkraftüberschuß und erkannter Stationärfahrt, ermittelt die Funktion, daß für die gegebene Motorleistung P im Punkt B der spezifische Kraftstoffverbrauch be am geringsten und damit der Wirkungsgrad am höchsten ist. Demzufolge beginnt die Funktion die Übersetzung i so zu verändern, daß die Motordrehzahl nmot(t), ausgehend von der bei Funktionsbeginn anliegenden Motordrehzahl nmot1 abzusenken. Solange der Fahrer nicht eingreift, ändert sich die Motorleistung P entsprechend der Linie konstanter Drosselklappenstellung alpha(t), die den Punkt A schneidet. Erst wenn ein spürbarer Abfall der Fahrgeschwindigkeit v(t) eintritt, wird der Fahrer auf die Veränderung aufmerksam gemacht und er ändert die Drosselklappenstellung alpha(t), um so die Motorleistung P wieder zu erhöhen und schließlich seine ursprüngliche Fahrgeschwindigkeit v(t) wieder zu erreichen. Dieser Vorgang setzt sich solange fort, bis der Punkt B erreicht ist, so daß sich insgesamt, d.h. unter Berücksichtigung des Einflusses des Fahrers, ein Verlauf in etwa in Form der Linie C ergibt.

## Patentansprüche

1. Steuerverfahren eines stufenlosen Getriebes, das mit einer Brennkraftmaschine verbunden ist und dessen Steuereinrichtung nach einer oder mehreren Steuerkennlinien eine Übersetzung (i) des Getriebes nach Maßgabe der Stellung eines Leistungssteuerorganes (alpha(t)) selbsttätig einstellt, **gekennzeichnet** durch folgende Schritte zur Beeinflussung der Einstellung der Übersetzung:
- Erkennen einer konstanten Fahrweise (1) durch
a) Prüfen, ob ein Zugkraftüberschuß vorliegt und,
b) Prüfen, ob das Leistungssteuerorgan betätigt ist und
c) Prüfen, ob die aktuelle Änderungsgeschwindigkeit der Stellung des Leistungssteuerorganes (alpha(t)) gering ist und
d) Prüfen, ob die aktuelle Änderungsgeschwindigkeit einer Fahrgeschwindigkeit (v(t)) gering ist,
- Verstellen der Übersetzung (3,4) in Richtung einer Übersetzung, bei der die Brennkraftmaschine bei gleicher Leistung (P) einen geringeren spezifischen Brennstoffverbrauch (be) aufweist, so lange, bis ein Punkt geringsten spezifischen Brennstoffverbrauches (be_min) für diese Leistung (P) erreicht ist.

2. Steuerverfahren nach Anspruch 1, **dadurch gekennzeichnet**, daß das Verstellen der Übersetzung (3) mit folgenden Schritten durchgeführt wird:
- Ermitteln einer verbrauchsoptimalen Soll-Antriebsdrehzahl (n_soll) abhängig von der Stellung des Leistungssteuerorganes (alpha(t)) und einer Abtriebsdrehzahl (na(t),
- Anpassen der Übersetzung (i) so, daß eine Differenz zwischen der Soll-Antriebsdrehzahl (n_soll) und der Ist-Antriebsdrehzahl (nmot(t)) mit vorgegebener Änderungsgeschwindigkeit abgebaut wird.

3. Steuerverfahren nach einem der vorangehenden Ansprüche, **dadurch gekennzeichnet**, daß zwischen den Schritten Erkennen der konstanten Fahrweise (1) und Verstellen der Übersetzung (3) ein weiterer Schritt
- Erkennen einer Stationärfahrt (2) vorgesehen ist, der Unterschritte
- Prüfen, ob während einer vorgegebenen Überwachungszeit das Integral über den Betrag der Änderungen der Stellung des Leistungssteuerorganes (alpha(t)) kleiner als ein Grenzwert ist, und
- Prüfen, ob während einer vorgegebenen Überwachungszeit das Integral über den Betrag der Änderungen der Fahrgeschwindigkeit (v(t)) kleiner als ein Grenzwert ist
enthält.

4. Steuerverfahren nach einem der vorangehenden Ansprüche, **dadurch gekennzeichnet**, daß der Schritt Verstellen der Übersetzung (3) abgebrochen wird, wenn das Erkennen der konstanten Fahrweise nicht mehr gegeben ist.

5. Steuereinrichtung eines mit einer Brennkraftmaschine verbundenen stufenlosen Getriebes, die nach einer oder mehreren Steuerkennlinien eine Übersetzung (i) des Getriebes nach Maßgabe der Stellung eines Leistungssteuerorganes (alpha(t)) selbsttätig einstellt, **dadurch gekennzeichnet**, daß eine Vergleichseinrichtung zum Erkennen einer konstanten Fahrweise und eine auf die Einstellung einer Soll-Übersetzung (i_soll) wirkende Recheneinrichtung vorgesehen sind, wobei
- die Vergleichseinrichtung zum Erkennen der konstanten Fahrweise eine erste Untervergleichseinrichtung für eine Zugkraftkennzahl (mf1(t)), eine zweite Untervergleichseinrichtung für die Stellung des Leistungssteuerorganes (alpha(t), eine dritte Untervergleichseinrichtung für die Änderungsgeschwindigkeit der Stellung des Leistungssteuerorganes (alpha(t)), eine vierte Untervergleichseinrichtung für die Änderungsgeschwindigkeit einer Fahrgeschwindigkeit (v(t)) sowie eine Verknüpfungsvorrichtung für die Signale der Untervergleichseinrichtungen aufweist, wobei die erste, dritte und vierte Untervergleichseinrichtung jeweils ein Signal abgibt, wenn ein Grenzwert unterschritten ist, die zweite Untervergleichseinrichtung ein Signal abgibt, wenn ein Grenzwert überschritten ist und die Verknüpfungsvorrichtung ein Ausgangssignal der Vergleichseinrichtung erzeugt, wenn von allen Untervergleichseinrichtungen Signale vorliegen, und
- die Recheneinrichtung auf ein Signal der Vergleichseinrichtung hin ausgehend die aktuelle Übersetzung (i) in Richtung einer Übersetzung (i) verstellt, bei der die Brennkraftmaschine bei gleicher Leistung (p) einen geringeren spezifischen Brennstoffverbrauch (be) aufweist, so lange, bis ein Punkt geringsten spezifischen Brennstoffverbrauches (be_min) für diese Leistung (P) erreicht ist,

6. Steuereinrichtung nach Anspruch 5, **dadurch gekennzeichnet**, daß die Recheneinrichtung zum Verstellen der Übersetzung (i) eine verbrauchsoptimalen Soll-Antriebsdrehzahl (n_soll) abhängig von der Stellung des Leistungssteuerorganes (alpha(t)) und einer Abtriebsdrehzahl des getriebes (na(t)) ermittelt und die Übersetzung (i) so berechnet, daß eine Differenz zwischen der Soll-Antriebsdrehzahl (n_soll) und der Ist-Antriebsdrehzahl (nmot(t)) mit vorgegebener Änderungsgeschwindigkeit abgebaut wird.

7. Steuereinrichtung nach Anspruch 5 oder 6, **dadurch gekennzeichnet**, daß zwischen der Vergleichseinrichtung und der Recheneinrichtung zusätzlich eine Prüfeinrichtung vorgesehen ist, die das Signal der Vergleichseinrichtung nur dann weiterleitet, wenn diese konstante Fahrweise erkannt hat, wobei die Prüfeinrichtung einen ersten Integrator zur Bildung eines Integrales über den Betrag der Änderungen der Stellung des Leistungssteuerorganes (alpha(t)), einen zweiten Integrator zur Bildung des Integrales über den Betrag der Änderungen der Fahrgeschwindigkeit (v(t)), eine fünfte Untervergleichseinrichtung zum Vergleich des Signales des ersten Integrators mit einem oberen Grenzwert und eine sechste Untervergleichseinrichtung zum Vergleich des Signales des zweiten Integrators mit einem oberen Grenzwert enthält.

8. Steuereinrichtung nach einem der Ansprüche 5 bis 7, **dadurch gekennzeichnet**, daß der Recheneinrichtung eine Überwachungseinrichtung zugeordnet ist, die eine weitere Prüfeinrichtung zur Prüfung auf konstante Fahrweise aufweist und daraufhin ein Signal abgibt, das die Recheneinrichtung unmittelbar deaktiviert.

9. Steuereinrichtung nach einem der Ansprüche 5 bis 8, **dadurch gekennzeichnet**, daß eine Geschwindigkeitsregelvorrichtung vorgesehen ist.

## Claims

1. A method of controlling a continuous transmission, which is connected to an internal-combustion engine and the control device of which automatically sets a gear ratio (**i**) of the transmission in proportion to the setting of a power-control member (**alpha(t)**) in accordance with one or more control characteristics, **characterized by** the following steps for controlling the setting of the gear ratio:
- identifying a constant manner of driving (1) by
a) checking whether a traction-force surplus is present, and
b) checking whether the power-control member is actuated, and
c) checking whether the current rate of change of the setting of the power-control member (**alpha(t)**) is low, and
d) checking whether the current rate of change of a travelling speed (**v(t)**) is low,
- shifting the gear ratio (3, 4) in the direction of a gear ratio in which the internal-combustion engine has a lower specific fuel consumption (**be**) with the same power (**P**), until a point of minimum specific fuel consumption (**be_min**) for this power (**P**) is reached.

2. A control method according to Claim 1, **characterized in that** the shifting of the gear ratio (3) is carried out with the following steps:
- determining a nominal driving rotational speed **(n_soll) -** at an optimum for consumption - as a function of the setting of the power-control member (**alpha(t)**) and an output rotational speed **(na(t)),**
- adapting the gear ratio (i) in such a way that a difference between the nominal driving rotational speed **(n_soll)** and the actual driving rotational speed **(nmot(t))** is reduced at a pre-determined rate of change.

3. A control method according to one of the preceding Claims, **characterized in that** between the steps of identifying a constant style of driving (1) and shifting the gear ratio (3) a further step
- identifying a constant-speed driving (2) is provided, containing the sub-steps:
- checking whether during a pre-determined monitoring period the integral over the amount of the changes in the setting of the power-control member (**alpha(t)**) is smaller than a threshold value, and
- checking whether during a pre-determined monitoring period the integral over the amount of the changes in the travelling speed (**v(t)**) is smaller than a threshold value.

4. A control method according to one of the preceding Claims, **characterized in that** the step of shifting the gear ratio (3) is interrupted when the identification of the constant manner of driving no longer occurs.

5. A control device of a continuous transmission connected to an internal-combustion engine, which automatically sets a gear ratio (**i**) of the transmission in proportion to the setting of a power-control member (**alpha(t)**) in accordance with one or more control characteristics, **characterized in that** a comparison device for identifying a constant manner of driving and a calculating device acting upon the setting of a nominal gear ratio (**i_soll**) are provided, wherein
- the comparison device for identifying the constant manner of driving comprises a first subordinate comparison device for a traction-force characteristic number (**mf1(t)**), a second subordinate comparison device for the setting of the power-control member (**alpha(t)**), a third subordinate comparison device for the rate of change of the setting of the power-control member (**alpha(t)**), a fourth subordinate comparison device for the rate of change of a travelling speed (**v(t)**) and a combination device for the signals of the subordinate comparison devices, wherein the first, third and fourth subordinate comparison devices each emit a signal if a threshold value is not reached, the second subordinate comparison device emits a signal if a threshold value is exceeded, and the combination device delivers an output signal of the comparison device if signals of all the subordinate comparison devices are present, and
- starting on a signal of the comparison device the calculating device shifts the current gear ratio (**i**) in the direction of a gear ratio (**i**) in which the internal-combustion engine has a lower specific fuel consumption (**be**) with the same power (**p**), until a point of minimum specific fuel consumption (**be**_**min**) for this power (**P**) is reached.

6. A control device according to Claim 5, **characterized in that** the calculating device for shifting the gear ratio (**i**) determines a nominal driving rotational speed (**n_soll**) - at an optimum for consumption - as a function of the setting of the power-control member **(alpha(t))** and an output rotational speed of the transmission **(na(t)),** and calculates the gear ratio (**i**) in such a way that a difference between the nominal driving rotational speed (**n_soll**) and the actual driving rotational speed **(nmot(t))** is reduced at a pre-determined rate of change.

7. A control device according to Claim 5 or 6, **characterized in that** a testing device. which passes on the signal of the comparison device only when the latter has identified a constant manner of driving, is provided between the comparison device and the calculating device, wherein the testing device contains a first integrator for forming an integral over the amount of the changes in the setting of the power-control member (**alpha(t)**), a second integrator for forming the integral over the amount of the changes in the travelling speed (**v(t)**), a fifth subordinate comparison device for comparing the signal of the first integrator with an upper threshold value and a sixth subordinate comparison device for comparing the signal of the second integrator with an upper threshold value.

8. A control device according to one of Claims 5 to 7, **characterized in that** the calculating device has associated therewith a monitoring device which comprises a further testing device for testing for a constant manner of driving and thereupon emits a signal directly deactivating the calculating device.

9. A control device according to one of Claims 5 to 8, **characterized in that** a speed-control device is provided.

## Revendications

1. Procédé de commande d'une transmission à variation continue qui est reliée à un moteur à combustion interne et dont le dispositif de commande règle automatiquement, suivant une ou plusieurs courbes caractéristiques de commande, un rapport (i) de la transmission, en fonction de la position (alpha(t)) d'un organe de commande de puissance, caractérisé par les étapes suivantes destinées à influencer le réglage du rapport de transmission:
- reconnaissance (1) d'un mode de conduite constant par
a) vérification de la présence d'une réserve de puissance de traction, et
b) vérification de l'actionnement de l'organe de commande de puissance, et
c) vérification que la vitesse actuelle de variation de la position (alpha(t)) de l'organe de commande de puissance est basse, et
d) vérification que la vitesse actuelle de variation d'une vitesse de marche (v (t)) est basse,
- réglage (3, 4) du rapport de transmission dans le sens d'un rapport pour lequel le moteur à combustion interne présente, pour une même puissance (P), une consommation spécifique de carburant (be) réduite, aussi longtemps qu'un point de consommation spécifique minimale de carburant (be_min) pour cette puissance (P) n'est pas atteint.

2. Procédé de commande selon la revendication 1, **caractérisé en ce que** le réglage (3) du rapport est exécuté selon les étapes suivantes:
- détermination d'une vitesse d'entraînement de consigne (n_soll) optimale sur le plan de la consommation en fonction de la position (alpha(t)) de l'organe de commande de puissance et d'une vitesse de rotation de sortie (na(t)),
- adaptation du rapport (i) de manière à réduire un écart entre la vitesse d'entraînement de consigne (n_soll) et la vitesse d'entraînement réelle (nmot (t)), avec rapidité de variation donnée.

3. Procédé de commande selon l'une des revendications précédentes, **caractérisé en ce qu**'il est prévu, entre l'étape (1) de reconnaissance du mode de conduite constant et l'étape (3) de réglage du rapport, une autre étape (2) de reconnaissance d'une marche constante qui contient les sous-étapes suivantes:
- vérifier si pendant un temps de surveillance donné, l'intégrale de la valeur des variations de la position (alpha(t)) de l'organe de commande de puissance est inférieure à une valeur limite, et
- vérifier si pendant un temps de surveillance donné, l'intégrale de la valeur des variations de la vitesse de marche (v (t)) est inférieure à une valeur limite.

4. Procédé de commande selon l'une des revendications précédentes, **caractérisé en ce que** l'étape (3) de réglage du rapport est interrompue lorsqu'il n'y a plus reconnaissance du mode de conduite constant.

5. Dispositif de commande d'une transmission à variation continue, reliée à un moteur à combustion interne, qui règle automatiquement, suivant une ou plusieurs courbes caractéristiques de commande, un rapport (i) de la transmission suivant la position (alpha(t)) d'un organe de commande de puissance, **caractérisé en ce que** sont prévus un dispositif de comparaison permettant de reconnaître un mode de conduite constant, ainsi qu'un dispositif de calcul agissant sur le réglage d'un rapport de consigne (i_soll), dans lesquels
- le dispositif de comparaison permettant de reconnaître le mode de conduite constant comporte un premier sous-dispositif de comparaison pour une caractéristique de puissance de traction (mfl (t)), un deuxième sous-dispositif de comparaison pour la position (alpha(t)) de l'organe de commande de puissance , un troisième sous-dispositif de comparaison pour la vitesse de variation de la position (alpha(t)) de l'organe de commande de puissance, un quatrième sous-dispositif de comparaison pour la vitesse de variation d'une vitesse de marche (v (t)), ainsi qu'un dispositif de combinaison pour les signaux des sous-dispositifs de comparaison, le premier, le troisième et le quatrième sous-dispositifs de comparaison délivrant chacun un signal lorsque la grandeur comparée est inférieure à une valeur limite, le deuxième sous-dispositif de comparaison délivrant un signal lorsque la grandeur comparée est supérieure à une valeur limite, et le dispositif de combinaison générant un signal de sortie du dispositif de comparaison, lorsque l'on est en présence de signaux de tous les sous-dispositifs de comparaison, et
- le dispositif de calcul, partant d'un signal du dispositif de comparaison, règle le rapport actuel (i) dans le sens d'un rapport (i) pour lequel le moteur à combustion interne présente, pour une même puissance (P), une consommation spécifique de carburant (be) réduite, aussi longtemps qu'un point de consommation spécifique minimale de carburant (be_min) n'est pas atteint pour cette puissance P.

6. Dispositif de commande selon la revendication 5, **caractérisé en ce que** le dispositif de calcul pour le réglage du rapport (i) détermine une vitesse d'entraînement de consigne (n_soll) optimale quant à la consommation, qui dépend de la position (alpha(t)) de l'organe de commande de puissance et d'une vitesse de rotation de sortie (na(t)) de la transmission, et calcule le rapport (i) de manière à réduire un écart entre la vitesse d'entraînement de consigne (n_soll) et la vitesse d'entraînement réelle (nmot (t)), avec une rapidité de variation donnée.

7. Dispositif de commande selon la revendication 5 ou 6, **caractérisé en ce qu**'il est prévu en supplément, entre le dispositif de comparaison et le dispositif de calcul, un dispositif de vérification qui ne transmet le signal du dispositif de comparaison que lorsque ce dernier a reconnu un mode de conduite constant, le dispositif de vérification comportant un premier intégrateur destiné à former une intégrale de la somme des variations de la position (alpha(t)) de l'organe de commande de puissance, un deuxième intégrateur destiné à former l'intégrale de la somme des variations de la vitesse de marche (v (t)), un cinquième sous-dispositif de comparaison pour la comparaison du signal du premier intégrateur à une valeur limite supérieure, et un sixième sous-dispositif de comparaison pour la comparaison du signal du deuxième intégrateur à une valeur limite supérieure.

8. Dispositif de commande selon l'une des revendications 5 à 7, **caractérisé en ce qu**'au dispositif de calcul est associé un dispositif de surveillance qui comporte un autre dispositif de vérification pour la vérification du môde de conduite constant et qui ensuite délivre un signal qui désactive directement le dispositif de calcul.

9. Dispositif de commande selon l'une des revendications 5 à 8, **caractérisé en ce qu**'il est prévu un dispositif de régulation de la vitesse.
